# EUROPÄISCHE PATENTSCHRIFT

(11) **EP 0 995 567 B1**
(45) Veröffentlichungstag und Bekanntmachung des Hinweises auf die Patenterteilung: **19.11.2003**
(21) Anmeldenummer: 99119358.2
(22) Anmeldetag: 29.09.1999
(51) Int. Cl.: B29B 7/90, B29B 9/14, B29B 7/84, B29B 7/46, B29C 47/10, B29C 47/38, B29C 47/76

(54) **Verfahren zur Herstellung von gefüllten, modifizierten und mit Fasern verstärkten Thermoplasten und Doppel-Schnecken-Extruder zur Durchführung des Verfahrens**
Method for producing filled, modified and fibre reinforced thermoplastics and twin-screw-extruder for carrying out the method
Procédé pour la fabrication de résine thermoplastique modifiée, chargée et renforcée de fibres et une extrudeuse-double-vis pour la mise en oeuvre du procédé

(30) Priorität: 19.10.1998 DE 19848124
(43) Veröffentlichungstag der Anmeldung: 26.04.2000
(73) Patentinhaber: Coperion Werner & Pfleiderer GmbH & Co. KG, 70469 Stuttgart (DE)
(72) Erfinder: Scheuring, Bernhard, 71563 Affalterbach (DE); Häring, Erwin, Dipl.-Ing., 70195 Stuttgart (DE); Schwendemann, Daniel, 70839 Gerlingen (DE)
(74) Vertreter: Rau, Manfred, Dr. Dipl.-Ing.

(56) Entgegenhaltungen:
- EP-A- 0 118 847
- EP-A- 0 293 234
- EP-A- 0 426 619
- DE-A- 2 312 436
- DE-A- 19 530 020
- GB-A- 1 151 964
- GB-A- 1 174 219
- GB-A- 1 208 476
- US-A- 4 863 363
- US-A- 5 593 227

## Beschreibung

Die Erfindung betrifft ein Verfahren zur Herstellung von gefüllten, modifizierten und mit Fasern verstärkten Thermoplasten nach dem Oberbegriff des Anspruches 1 und einen Doppel-Schnecken-Extruder nach dem Oberbegriff des Anspruches 5.

Es ist ein Verfahren der gattungsgemäßen Art bekannt, bei dem geschnittene Glas-Fasern mit einer mittleren Länge von 3 bis 6 mm einem Extruder mittels einer sogenannten Seitenbeschickung zugeführt werden. Diese Fasern werden beim Einmischen auf eine mittlere Länge von 0,3 bis 0,6 mm zerschnitten. Grundsätzlich liegt der Vorteil der eingemischten Füllstoffe darin, daß das fertige Produkt verbilligt wird; Füllstoffe führen in der Regel aber auch dazu, daß der E-Modul des Thermoplasts erhöht und die Maßhaltigkeit von aus dem Thermoplast durch Spritzgießen hergestellten Bauteile verbessert wird. Das Blenden wird in der Regel eingesetzt, um die Thermoplaste besser fließfähig, und temperatur- und chemikalienbeständiger zu machen, sowie um die mechanischen Eigenschaften, z.B. die Schlagzähigkeit, zu verbessern.

Weiterhin ist es bekannt, Thermoplasten Fasern in Form von Faserabschnitten mit einer mittleren Faserlänge über 1,5 mm zuzusetzen. Derartige Thermoplaste sind aber für einige Anwendungen nicht ausreichend maßhaltig; außerdem läßt die Schlagzähigkeit zu wünschen übrig. Es kommt hinzu, daß temperatur- bzw. scherempfindliche Polymere bei mehrmaligen Aufschmelz- und Verarbeitungsvorgängen, beispielsweise beim nachträglichen Einarbeiten von Füllstoff, abgebaut werden.

Aus der EP 0 426 619 A2 ist ein Verfahren zur Herstellung von gefüllten, und mit Fasern verstärkten Thermoplasten durch Vermischen von Polymeren, Füllstoffen und Fasern bekannt, bei dem auf einem Doppel-Schnecken-Extruder mit gleichsinnig antreibbaren Wellen in einer Einzugszone Polymer zugeführt wird. Das Polymer wird in einer Aufschmelzzone aufgeschmolzen. Anschließend wird Füllstoff in einer Füllstoff-Zugabezone eingeführt und danach mit dem Polymer gemischt und geknetet. Kurzgeschnittene Fasern werden in einer Faser-Zugabezone zugegeben und anschließend eingemischt. Danach folgt ein Entgasen. Der gefüllte und mit kurzen Faserabschnitten verstärkte Thermoplast wird in einer Austragszone ausgetragen. Es treten die vorstehend bereits geschilderten Probleme und Nachteile auf.

Aus der EP 0 118 847 A2 ist ein Verfahren zur Herstellung von mit Fasern verstärkten Thermoplasten durch Vermischen von Polymeren, Zusatzgranulat und Fasern bekannt. Hierbei werden auf einem Doppel-Schnecken-Extruder mit gleichsinnig antreibbaren Wellen zuerst Polymer in einer Einzugszone zugeführt und anschließend aufgeschmolzen und danach Zusatz-Granulat zugegeben und eingemischt. Danach werden geschnittene Glasfasern zugeführt und eingemischt, wobei gleichzeitig das Zusatzgranulat aufgeschmolzen wird. Danach erfolgt noch ein Entgasen. Der gefüllte und mit kurzen Faserabschnitten verstärkt Thermoplast wird in einer Austragszone ausgetragen. Auch hier treten die vorstehend angesprochenen Probleme und Nachteile auf.

Aus der DE 40 16 784 C2 (entspr. US-Patent 5,110,275) ist ein Extruder bekannt, dem Glasfasern in Form eines Faserstranges, eines sogenannten Faser-Rovings, derart zugeführt werden, daß im Extruder eine ausreichende Benetzung mit dem aufgeschmolzenen Kunststoff erfolgt.

Aus der EP 0 835 175 A (entspr. US Ser.No. 08/669 710) ist eine Imprägniervorrichtung bekannt, in der die dem Extruder zuzuführenden Faser-Rovings mit einem Kunststoff imprägniert werden.

Den bekannten Extrudern ist gemeinsam, daß die Fasern zu sogenannten Kurzfasern, d.h. zu sehr kurzen Stücken von 0,2 bis 0,7 mm Länge, zerbrochen werden.

Aus der EP 0 056 703 B2 ist ein sogenanntes Pulltrusions-Verfahren bekannt, bei dem endlose Faserstränge durch eine Kunststoffschmelze gezogen werden, um hierdurch einen Verbundwerkstoff zu bilden. Hierbei bleiben zwar die Fasern über ihre volle Länge erhalten; dieses Verfahren ist aber nur mit sehr niedrigviskosen Kunststoffschmelzen ausführbar und daher nur begrenzt einsetzbar.

Der Erfindung liegt die Aufgabe zugrunde, ein Verfahren der gattungsgemäßen Art so auszugestalten, daß die erzeugten Thermoplaste hohe mechanische Festigkeit und hohe Schlagzähigkeit sowie Splitterfreiheit beim Bruch und hohe Maßhaltigkeit beim Spritzgießen aufweisen, und einen Doppel-Schnecken-Extruder zur Durchführung des Verfahrens bereitzustellen.

Diese Aufgabe wird erfindungsgemäß durch die Merkmale im Kennzeichnungsteil des Anspruches 1 gelöst. Durch die Kombination der dort angegeben Verfahrensschritte lassen sich Thermoplaste herstellen, die beim Spritzgießen zu einem besonders genau maßhaltigen Produkt mit hoher mechanischer Festigkeit und hoher Schlagzähigkeit sowie Splitterfreiheit beim Bruch führen. Letzteres wird insbesondere durch die langen Faserabschnitte bewirkt. Dieser Thermoplast ließ sich bisher in einem einstufigen Prozeß nicht herstellen. Durch den erfindungsgemäß einstufigen Herstellungsprozeß wird es auch möglich, besonders temperatur- und scherempfindliche Polymere, wie z.B. Polyester, einzusetzen. Zum Beispiel lassen sich aus derartigen Thermoplasten Stoßfänger für Kraftfahrzeuge herstellen.

Der zur Durchführung des Verfahrens eingesetzte Extruder zeichnet sich insbesondere durch die Merkmale im Kennzeichnungsteil des Anspruches 5 aus. Hierbei erfolgt in der Faser-Einmischzone eine extrem schonende Behandlung des Kunststoffes und der Fasern, so daß diese nur in geringem Umfang zerbrochen werden, also in einem statistisch gemittelten Längenbereich von 1,5 bis 4 mm erhalten bleiben. Insbesondere ist es von Vorteil, wenn jeweils auf jeder Welle nur ein Mischelement, auf beiden Wellen also nur ein Paar Mischelemente, und anschließend vor dem nächsten Paar von Mischelementen ein Förder-Schneckenelement vorhanden ist.

Durch die Weiterbildung nach den Ansprüchen 6 und 7 wird sichergestellt, daß die Glasfasern in den Kunststoff eingeschlossen werden und nicht aus diesem herausragen, was bei der späteren Weiterverarbeitung auf Spritzgießmaschinen zu erheblichen Störungen führen könnte. Das nach Anspruch 8 vorgesehene vorherige Imprägnieren der Faser-Rovings ermöglicht eine gute und ausreichende Einmischung der Faserabschnitte in den Thermoplast, ohne daß es hierzu eines intensiven Knetvorganges bedürfte, bei dem die Faserabschnitte zu sehr zerkleinert würden.

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: eine Anlage zur Compoundierung von Kunststoffen mit Füllstoffen, Fasern und Blend in schematischer Seitenansicht,
- Fig. 2: einen Horizontalschnitt durch den in Fig. 1 dargestellten Extruder,
- Fig. 3: einen Vertikalschnitt durch den in Fig. 1 dargestellten Extruder und
- Fig. 4: eine Vertikalschnitt durch den in Fig. 1 angedeuteten Spritzkopf.

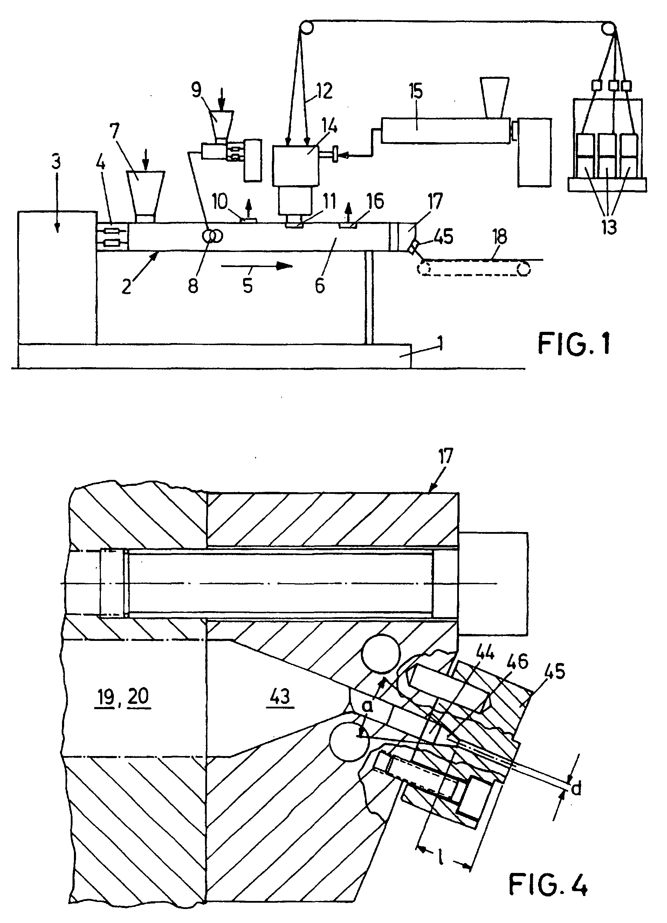

Die in Fig. 1 dargestellte Anlage zur Compoundierung von gefüllten, modifizierten und langfaserverstärkten Kunststoffen weist einen auf einem Grundgestell 1 abgestützten Extruder 2 auf, dem eine Antriebseinheit 3 über eine Kupplung 4 vorgeordnet ist. In Förderrichtung 5 des Extruders 2 münden eine Reihe von nachfolgend beschriebenen Einrichtungen in dessen Gehäuse 6 ein. Benachbart zur Kupplung 4, also in Förderrichtung 5 am stromaufwärtigen Ende, mündet ein Zuführtrichter 7 in das Gehäuse 6. Hierdurch werden aufzubereitendes Polymer, beispielsweise Polyester als Matrixmaterial und Blend, dem Extruder 2 dosiert zugeführt. In Förderrichtung 5 dem Zuführtrichter 7 nachgeordnet, mündet ein zweiwelliger Schnecken-Förderer 8 in das Gehäuse 6, mittels dessen Füllstoff zugeführt wird. Dieser wird in einer dem Förderer 8 vorgeordneten Dosiervorrichtung 9 dosiert. Der Einmündung des Förderers 8 in Förderrichtung 5 nachgeordnet ist eine Entgasungsöffnung 10 vorgesehen, durch die eine Entgasung und Entlüftung gegenüber Atmosphäre, also nicht unter Vakuum erfolgt. Dieser Entgasungsöffnung 10 nachgeordnet ist im Gehäuse 6 eine Einführöffnung 11 für Faser-Rovings 12, und zwar insbesondere Glasfaser-Rovings, vorgesehen. Es können auch mehrere Einführöffnungen 11 vorgesehen sein. Diese Faser-Rovings 12 werden als Stränge von entsprechenden Wickeln 13 abgezogen, gegebenenfalls durch eine Imprägnier-Vorrichtung 14 geführt, und dann durch die Einführöffnung 11 in das Gehäuse 6 eingeführt. Der Imprägnier-Vorrichtung 14 ist ein Speiseextruder 15 zur dosierten Zuführung des Imprägniermittels vorgeordnet, bei dem es sich um Matrixmaterial handelt. Eine derartige Imprägnier-Vorrichtung 14 ist aus der EP 0 835 175 A (entspr. US- Ser.No. 08/669 710, entspr. JP Hei-9-504 155) bekannt, worauf bezüglich der Einzelheiten ausdrücklich verwiesen wird. Weiter stromab in Förderrichtung 5 ist eine Vakuum-Entgasungs-Öffnung 16 im Gehäuse 6 vorgesehen. Am stromabwärtigen Ende des Gehäuses 6 ist ein Spritzkopf 17 vorgesehen. Diesem ist ein angetriebenes Förderband 18 nachgeordnet.

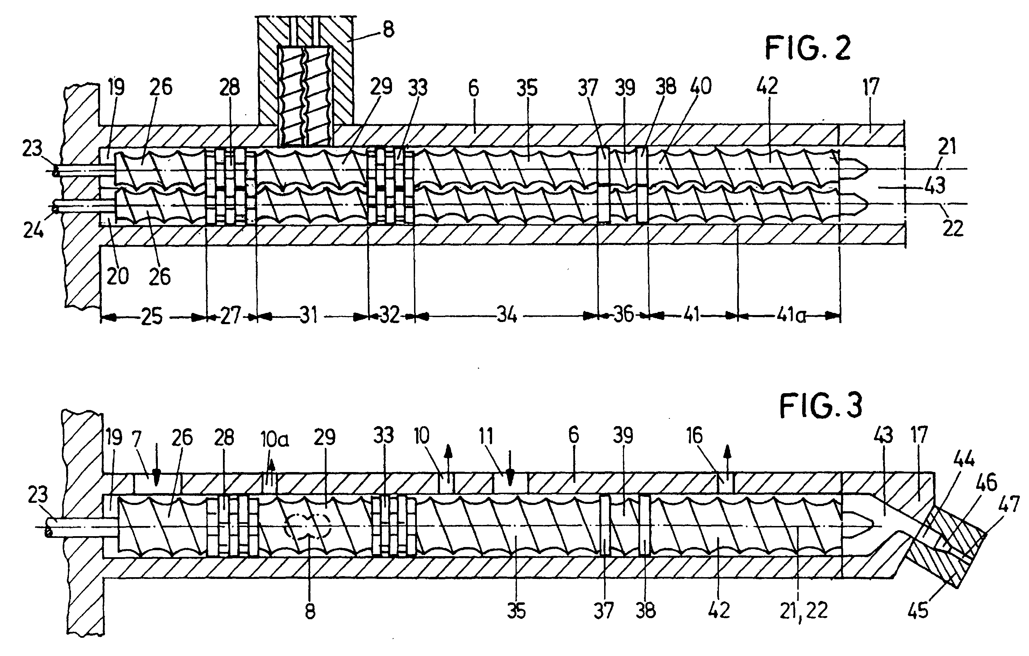

Der innere Aufbau des Extrudes 2 geht aus den Fig. 2 und 3 hervor. Das Gehäuse 6 weist in der üblichen Weise zwei einander durchdringende Gehäusebohrungen 19, 20 auf, hat also einen etwa 8-förmigen Innenquerschnitt. In diesen Gehäusebohrungen 19, 20 sind zwei zu deren Mittel-Längs-Achsen 21, 22 konzentrische Wellen 23, 24 angeordnet, die von der Antriebs-Einheit 3 über die Kupplung 4 gleichsinnig drehend angetrieben werden. Im Bereich des Zuführtrichters 7, also im Bereich einer Einzugszone 25, sind auf den Wellen 23, 24 miteinander kämmende Schnekkenelemente 26 angebracht, an die sich in einer Aufschmelzzone 27 auf den Wellen 23, 24 angebrachte Knetelemente 28 anschließen. Derartige in einem sogenannten Knetblock angeordnete Knetelemente 28 sind beispielsweise aus der EP 0 160 124 B1 (entspr. US-Patent 4 824 256) bekannt, worauf verwiesen werden darf. Mittels solcher Knetelemente 28 wird der vom Zuführtrichter 7 mittels der Schneckenelemente 26 zugeführte Kunststoff in einem intensiven Knet- und Scher-Prozeß aufgeschmolzen, wobei die gegebenenfalls bereits im Zuführtrichter 7 zugegebenen Additive und der Blendpolymer aufgeschmolzen und eingemischt werden.

An die als Knetblöcke ausgebildeten Knetelemente 28 schließen sich wiederum der Förderung dienende, mit den Schneckenelementen 26 gleichartige Schneckenelemente 29 an. Diese erstrecken sich über eine Füllstoff-Zugabezone 31, in der der Schnecken-Förderer 8 in das Gehäuse 6 einmündet und durch die eine Rückwärtsentlüftung entgegen der Förderrichtung 5 gegen Atmosphäre erfolgt. Zwischen den Knetelementen 28 und der Einmündung des Schnecken-Förderers 8 mündet eine Entlüftungsöffnung 10a aus dem Gehäuse 6, durch die eine Rückwärtsentlüftung entgegen der Förderrichtung 5 gegen Atmosphäre erfolgt. Die Füllstoffe werden in einer Füllstoff-Einmischzone 32 in den Kunststoff eingemischt, in der wiederum grundsätzlich mit den Knetelementen 28 gleichartige Knetelemente 33 auf den Wellen 23, 24 angebracht sind, die ebenfalls in Form von sogenannten Knetblöcken vorliegen. Zwischen den Knetelementen 33 und der Einführöffnung 11 für Faser-Rovings 12 ist die Entgasungsöffnung 10 vorgesehen. An die Füllstoff-Einmischzone 32 schließt sich eine Faser-Zugabezone 34 an, in der auf den Wellen 23, 24 wiederum Schneckenelemente 35 angebracht sind, die mit den Schneckenelementen 26 und 29 grundsätzlich gleich ausgebildet sind. In diese Faser-Zugabezone 24 mündet die Einführöffnung 11 für Faser-Rovings 12 ein. Dieser Bereich kann grundsätzlich so ausgebildet sein, wie es in der DE 40 16 784 C2 (entspr. US-Patent 5,110,275) dargestellt und beschrieben ist, worauf ausdrücklich verwiesen wird.

Dieser Faser-Zugabezone 34 schließt sich eine Faser-Einmischzone 36 an, in der die Glasfasern schonend, d.h. ohne wesentliche Zerstörung, in das mit Füllstoffen gefüllte und zusätzlich mit Blendpolymer versehene, durch Polymer gebildete Matrixmaterial als sogenannte Langfasern eingemischt werden. Damit diese schonende Einmischung erfolgt, sind auf den Wellen 23, 24 im axialen Abstand voneinander Mischelemente 37, 38 vorgesehen, wobei jeweils an ein Paar Mischelemente 37 bzw. 38 sich der Förderung dienende Schneckenelemente 39, 40 anschließen. Diese Mischelemente 37 bzw. 38 können sowohl als Zahnmischelemente ausgebildet sein, wie sie aus der EP 0 537 450 B1 (entsprechend US-Patent 5,318,358) bekannt sind, oder sie können als Mischelemente ausgebildet sein, wie sie aus der DE 44 26 441 A1 (entspr. US-Patent 5,593,227) bekannt sind, worauf jeweils ausdrücklich verwiesen wird. Bei der Herstellung von faserverstärkten Strängen zur Granulatherstellung werden die Fasern der Faser-Rovings 12 zu Faserabschnitten von im Mittel über 1,0 mm und insbesondere von 1,5 bis 4,0 mm zerschnitten. Bei der Herstellung von faserverstärkten Bändern und Profilen kann die Länge der Faserabschnitte im Mittel 10 bis 50 mm betragen. Je mehr Mischelemente 37 bzw. 38 vorgesehen sind, bzw. je mehr spezifische Energie über die Wellen 23, 24 eingeleitet wird, um so kürzer werden die Faserabschnitte.

An die Faser-Einmischzone 36 schließt sich eine der Vakuum-Entgasungs-Öffnung 16 zugeordnete Entgasungszone 41 an, an die sich wiederum eine Druckaufbauzone 41a anschließt. In diesen Zonen 41, 41a sind ebenfalls wieder die geschilderten Schneckenelemente 42 vorgesehen.

Der Spritzkopf weist - wie üblich - einen sich verjüngenden Austrittskanal 43 auf, der in mehrere Düsenkanäle 44 einmündet, die in einer sogenannten Lochleiste 45 ausgebildet sind, die frontseitig an den Spritzkopf 17 angeschraubt ist. Jeder Düsenkanal weist einen verjüngten Kanalabschnitt 46 auf, für dessen Öffnungswinkel a gilt a < 30°. Die Verjüngung dieses Kanalabschnitts 46 bzw. seine Querschnittsreduktion in Förderrichtung 5 erfolgt über eine lange Strecke, so daß die Beschleunigung des durch den Düsenkanal 44 austretenden Materials langsam und stetig erfolgt. Der sich anschließende zylindrische Kanalabschnitt 47 hat einen Durchmesser d und eine Länge 1, die verhältnismäßig groß ist im Vergleich zum Durchmesser. Es gilt 1/d ≥ 5, wobei dieses Verhältnis um so größer ist, je kleiner der Durchmesser d ist. Durch diese optimierte Ausgestaltung der Düsenkanäle 44 in der Lochleiste 45 wird erreicht, daß die im Kunststoff enthaltenen Langfasern nicht wieder abgeschält werden, sondern im extrudierten Kunststoffstrang eingeschlossen sind und bleiben. Die nebeneinander auf das Förderband 18 extrudierten Kunststoffstränge werden einer nicht mehr dargestellten Granuliervorrichtung zugeführt und zu Granulat zerkleinert. Dadurch, daß die Langfasern nicht aus den einzelnen Kunststoffsträngen austreten, wird sichergestellt, daß die einzelnen Granulatkörner eine glatte Oberfläche haben und somit rieselfähig sind, was für die Schwerkraftzuführung zu einer Spritzgießmaschine oder dergleichen wichtig ist. Wenn kein Granulat hergestellt wird, sondern Bänder oder Profile extrudiert werden, dann können bekannte übliche Düsen eingesetzt werden.

Rezepturbereiche sind
30-70 Gew.% Polymer
bis 50 Gew.% Füllstoff, üblicherweise Talkum, Kreide, u.s.w.
bis 50 Gew.% Blendpolymer
5 bis 50 Gew.% Faser, üblicherweise Glas, Kohlefaser
bis 20 Gew.% Additive.

Ein Rezepturbeispiel ist
49 Gew.% Polypropylen (PP) als Matrixmaterial
25 Gew.% Talkum als Füllstoff
10 Gew.% Ethylen-Propylen-Dien-Kautschuk (EPDM) als Blendpolymer
15 Gew.% Glasfasern
1 Gew.% Additive.

Die Gewichtsprozent (Gew.%)-Angaben beziehen sich jeweils auf das Gesamtgewicht des fertigen Thermoplastes.

## Patentansprüche

1. Verfahren zur Herstellung von gefüllten, modifizierten und mit Fasern verstärkten Thermoplasten durch Vermischen von Polymeren, Blendpolymeren, Füllstoffen und Fasern,
**dadurch gekennzeichnet,**
**daß** auf einem Doppel-Schnecken-Extruder (2) mit gleichsinnig antreibbaren Wellen (23, 24) folgende Verfahrensschritte in einer Förderrichtung (5) ausgeführt werden:
- Polymer und Blendpolymer werden einer Einzugszone (25) dosiert zugeführt
- Polymer und Blendpolymer werden in einer Aufschmelzzone (27) aufgeschmolzen und gemischt
- Füllstoff wird in eine Füllstoff-Zugabezone (31) eingeführt
- Polymer, Blendpolymer und Füllstoff werden in einer Füllstoff-Einmischzone gemischt und geknetet
- Faser-Rovings (12) werden in eine Faser-Zugabezone (34) eingezogen
- die Fasern werden in einer Faser-Einmischzone (36) zu langen Faserabschnitten geschnitten und eingemischt
-- wobei bei der Herstellung von Granulat die Fasern zu Faserabschnitten mit einer mittleren Länge von 1,5 bis 4,0 mm zerschnitten werden oder
-- wobei bei der Herstellung von Bändern oder Profilen die Fasern zu Faserabschnitten mit einer mittleren Länge von 10 bis 50 mm zerschnitten werden,
- in einer Entgasungszone wird unter Vakuum entgast und
- der gefüllte, modifizierte und mit langen Faserabschnitten verstärkte Thermoplast wird in einer Austragszone ausgetragen.

2. Verfahren nach Anspruch 1, **dadurch gekennzeichnet,**
**daß** von der Zuführung der Füllstoffe her entgegen der Förderrichtung (5) eine atmosphärische Rückwärtsentlüftung durchgeführt wird.

3. Verfahren nach Anspruch 1 oder 2, **dadurch gekennzeichnet,**
**daß** zwischen der Füllstoff-Einmischung und der Zugabe der Faser-Rovings (12) eine atmosphärische Entlüftung und Entgasung erfolgt.

4. Verfahren nach einem der Ansprüche 1 bis 3, **dadurch gekennzeichnet, daß** die Faser-Rovings (12) vor dem Einzug in die Faser-Zugabezone (34) mit einem Teil des Polymers imprägniert werden.

5. Doppel-Schnecken-Extruder (2) zur Durchführung des Verfahrens nach einem der Ansprüche 1 bis 4, **gekennzeichnet durch**,
- ein Gehäuse (6),
- im Gehäuse (6) parallel zueinander angeordnete, gleichsinnig drehantreibbare Wellen (23, 24),
- auf den Wellen (23, 24) angebrachte Schneckenelemente (26, 29, 35, 39, 40, 42) und Knetelemente (28, 33),
- eine Zuführöffnung (7) für Polymer und Blendpolymer,
- eine in Förderrichtung (5) stromabwärts von der Zuführöffnung (7) vorgesehene Aufschmelzzone (27),
- eine in Förderrichtung (5) stromabwärts von der Aufschmelzzone (27) in das Gehäuse (6) einmündende Füllstoff-Zuführeinrichtung (8),
- eine in Förderrichtung (5) stromabwärts von der Füllstoff-Zuführeinrichtung (8) vorgesehene Füllstoff-Einmischzone (32),
- mindestens eine in Förderrichtung (5) stromabwärts von der Füllstoff-Einmischzone (32) vorgesehene, in eine Faser-Zugabezone (34) einmündende Einführöffnung (11) für Faser-Rovings (12),
- eine stromabwärts von der Faser-Zugabezone (34) ausgebildete Faser-Einmischzone (36), in der auf den Wellen (23, 24) jeweils abwechselnd nur ein Paar Mischelemente (37, 38) und jeweils nachfolgend ein Förder-Schneckenelement (39, 40) angebracht sind,
- eine stromabwärts von der Faser-Einmischzone (36) vorgesehene Vakuum-Entgasungszone (41a) und
- ein in Förderrichtung (5) nachgeordneter Spritzkopf (17).

6. Extruder (2) nach Anspruch 5, **dadurch gekennzeichnet,**
**daß** der Spritzkopf (17) mindestens einen Düsenkanal (44) mit einem sich in Förderrichtung (5) stetig verjüngenden Kanalabschnitt (46) aufweist, für dessen Öffnungswinkel a gilt: a ≤ 30°.

7. Extruder (2) nach Anspruch 6, **dadurch gekennzeichnet,**
**daß** an den sich verjüngenden Kanalabschnitt (46) sich ein zylindrischer Kanalabschnitt (47) mit einer Länge 1 und einem Durchmesser d anschließt, wobei für das Verhältnis l/d gilt : l/d ≥ 5.

8. Extruder (2) nach einem der Ansprüche 5 bis 7, **dadurch gekennzeichnet,**
**daß** der Einführöffnung (11) für Faser-Rovings (12) eine Imprägnier-Vorrichtung (14) für die Faser-Rovings (12) vorgeordnet ist.

## Claims

1. A method of preparing filled, modified and fiber reinforced thermoplastics by mixing polymers, blend polymers, possibly additives, fillers and fibers,
**characterized**
**in that** the following process steps are executed in a conveying direction (5) on a twin screw extruder (2) having shafts (23, 24) that are drivable to rotate in the same direction:
- polymer and blend polymer are metered and fed to a feed zone (25);
- polymer and blend polymer are melted and mixed in a melting zone (27);
- filler is fed into a filler feed zone (31);
- polymer, blend polymer and filler are mixed and kneaded in a filler incorporation zone;
- fiber rovings (12) are fed into a fiber feed zone (34);
- the fibers are cut to long fiber sections of at least 1.0 mm of average length and incorporated in a fiber incorporation zone (36);
- - wherein the fibers are cut into fiber sections of an average length of 1.5 to 4.0 mm in the production of pellets or
- - wherein the fibers are cut into fiber sections of an average length of 10 to 50 mm in the production of strips or sections,
- degassing by vacuum takes place in a vent zone; and
- the filled, modified and long-fiber reinforced thermoplastic is discharged in a discharge zone.

2. A method according to claim 1, **characterized in that** reverse atmospheric venting takes place as from the feed of the fillers counter to the conveying direction (5).

3. A method according to claim 1 or 2, **characterized in that** atmospheric venting and degassing takes place between the incorporation of the filler and the addition of the fiber rovings (12).

4. A method according to one of claims 1 to 3, **characterized in that** the fiber rovings (12) are impregnated with part of the polymer before being fed into the fiber feed zone (34).

5. A twin screw extruder (2) for putting the method according to one of claims 1 to 4 into practice, **characterized by**
- a casing (6);
- shafts (23, 24), which are drivable to rotate in the same direction and which are parallel to each other in the casing (6);
- screw elements (26, 29, 35, 39, 40, 42) and kneading disks (28, 33) which are mounted on the shafts (23, 24);
- a feeder port (7) for polymer and blend polymer;
- a melting zone (27) provided downstream of the feeder port (7) seen in the conveying direction (5);
- a filler incorporation zone (32) provided downstream of the filler feed device (8) seen in the conveying direction (5);
- at least one inlet port (11) for fiber rovings (12) which is provided downstream of the filler incorporation zone (32) and opens into a fiber feed zone (34);
- a fiber incorporation zone (36), which is formed downstream of the fiber feed zone (34) and in which only one pair of mixing elements (37, 38) and subsequently in each case a conveying screw element (39, 40) are mounted alternately on the shafts (23, 24);
- a vacuum vent zone (41a), which is provided downstream of the fiber incorporation zone (36); and
- a discharge head (17), which is disposed downstream in the conveying direction (5).

6. An extruder (2) according to claim 5, **characterized in that** the discharge head (17) comprises at least one die channel (44) having a channel section (46), which tapers continuously in the conveying direction (5) and to the aperture angle a of which a ≤ 30° applies.

7. An extruder (2) according to claim 6, **characterized in that** the tapering channel section (46) is followed by a cylindrical channel section (47) of a length 1 and a diameter d, wherein 1/d ≥ 5 applies to the ratio 1/d.

8. An extruder (2) according to one of claims 5 to 7, **characterized in that** an impregnating device (14) for fiber rovings (12) is disposed upstream of the inlet port (11) for the fiber rovings (12).

## Revendications

1. Procédé destiné à la fabrication de matières thermoplastiques chargées, modifiées et renforcées par des fibres, moyennant le mélange de polymères, de polymères blends, de matières de charge et de fibres,
**caractérisé en ce que**
les phases de procédé suivantes sont effectuées dans un sens de transport (5) sur une extrudeuse (2) à deux vis sans fin comportant des arbres (23, 24) pouvant être entraînés dans le même sens :
- le polymère et le polymère blend sont amenés de façon dosée à une zone d'entrée (25)
- le polymère et le polymère blend sont fondus et mélangés dans une zone de fusion (27)
- de la matière de charge est amenée dans une zone d'ajout (31) de matière de charge
- le polymère, le polymère blend et la matière de charge sont mélanges et malaxés dans une zone de mélange de matières de charge,
- des stratifils (12) de fibres sont insérés dans une zone d'ajout (34) de fibres
- les fibres sont découpées en longs tronçons de fibres dans une zone de mélange (36) de fibres, et mélangées,
-- les fibres étant découpées en tronçons de fibres d'une longueur moyenne de 1, 5 à 4, 0 mm lors de la fabrication de granulat, ou
-- les fibres étant découpées en tronçons de fibres d'une longueur moyenne de 10 à 50 mm lors de la fabrication de bandes ou de profilés,
- un dégazage est effectué sous vide dans une zone de dégazage, et
- la matière thermoplastique chargée, modifiée et renforcée par de longs tronçons de fibres est évacuée dans une zone d'évacuation.

2. Procédé selon la revendication 1, **caractérisé en ce qu'**une ventilation à contre-courant à l'opposé du sens du transport (5) est effectuée par rapport à de l'atmosphère à partir de l'amenée des matières de charge.

3. Procédé selon la revendication 1 ou 2, **caractérisé en ce qu'**une ventilation, atmosphérique et un dégazage sont effectués entre le mélange de matières de charge et l'ajout des stratifils (12) de fibres.

4. Procédé selon l'une quelconque des revendications 1 à 3, **caractérisé en ce que** les stratifils (12) de fibres sont imprégnés avec une partie du polymère avant l'entrée dans la zone d'ajout (34) de fibres.

5. Extrudeuse (2) à deux vis sans fin destinée à la mise en oeuvre du procédé selon l'une quelconque des revendications 1 à 4, **caractérisée par**
- un corps (6),
- des arbres (23, 24) pouvant être entraînés en rotation dans le même sens disposes parallèlement l'un par rapport à l'autre dans le corps (6),
- des éléments à vis sans fin (26, 29, 35, 39, 40, 42) et des éléments de malaxage (28, 33) fixés sur les arbres (23, 24),
- un orifices d'amenée (7) pour du polymère et du polymère blend,
- une zone de fusion (27) prévue en aval de l'orifice d'amenée (7) dans le sens du transport (5),
- un dispositif d'amenée (8) de matières de charge débouchant dans le corps (6) en aval de la zone de fusion (27) dans le sens du transport (5),
- une zone de mélange (32) de matières de charge prévue en aval du dispositif d'amenée (8) de matières de charge dans le sens du transport (5),
- au moins un orifice d'entrée (11) pour stratifils (12) de fibres prévu dans le sens du transport (5) en aval de la zone de mélange (32) de matières de charge, débouchant dans une zone d'ajout (34) de fibres,
- une zone de mélange (36) de fibres agencée en aval de la zone d'ajout (34) de fibres, dans laquelle seul un couple 'd'éléments de mélange (37, 38) suivi respectivement d'un élément à vis transporteuse sans fin (39, 40) est disposé en alternance sur les arbres (23, 24),
- une zone de dégazage sous vide (41a) prévue en aval de la zone de mélange (36) de fibres, et
- une tête d'injection (17) disposée en aval dans le sens du transport (5).

6. Extrudeuse (2) selon la revendication 5, **caractérisée en ce que** la tête d'injection (17) comporte au moins un canal de tuyère (44) avec un tronçon de canal (46) se rétrécissant en continu dans le sens du transport (5), pour l'angle d'ouverture a duquel : a ≤ 30° s'applique.

7. Extrudeuse (2) selon la revendication 6, **caractérisée en ce qu'**un tronçon de canal cylindrique (47) d'une longueur 1 et d'un diamètre d se raccorde au tronçon de canal (46) se rétrécissant, le rapport 1 / d étant de : 1 / d ≥ 5.

8. Extrudeuse (2) selon l'une quelconque des revendications 5 à 7, **caractérisée en ce qu'**un dispositif d'imprégnation (14) pour les stratifils (12) de fibres est disposé en amont de l'orifice d'entrée (11) pour stratifils (12) de fibres.
